# EUROPÄISCHE PATENTSCHRIFT

(11) **EP 3 418 749 B1**
(45) Veröffentlichungstag und Bekanntmachung des Hinweises auf die Patenterteilung: **15.06.2022**
(21) Anmeldenummer: 17177572.9
(22) Anmeldetag: 23.06.2017
(51) Int. Cl.: G01N 35/00, G01N 35/02, G01N 35/04

(54) **OPTISCHE ÜBERWACHUNG VON MISCHVORGÄNGEN**
OPTICAL MONITORING OF MIXING OPERATIONS
SURVEILLANCE OPTIQUE DE PROCESSUS DE MÉLANGE

(43) Veröffentlichungstag der Anmeldung: 26.12.2018
(73) Patentinhaber: Siemens Healthcare Diagnostics Products GmbH, 35041 Marburg (DE)
(72) Erfinder: Wiedekind-Klein, Alexander, 56812 Cochem (DE)

(56) Entgegenhaltungen:
- EP-A2- 2 308 588
- JP-A- S5 919 832
- JP-A- 2009 042 049

## Beschreibung

Die vorliegende Erfindung liegt auf dem Gebiet der automatischen Analysegeräte und betrifft eine Vorrichtung und ein Verfahren zur optischen Überwachung von Mischvorgängen von Flüssigkeiten in Flüssigkeitsbehältern.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Greifer zum Erfassen, Halten und Freigeben eines Flüssigkeitsbehälters vorgesehen, die über ein flexibles Verbindungselement mit einem horizontal und vertikal bewegbaren Transferarm verbunden sind. In der EP-A2-2308588 ist eine Vorrichtung zum Transfer eines Flüssigkeitsbehälters, insbesondere zum Transfer von röhrchenförmigen Reaktionsgefäßen (Küvetten), innerhalb eines automatischen Analysegeräts beschrieben. Die Vorrichtung weist einen passiven, elastisch verformbaren Greifer zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen.

Ferner ist es häufig notwendig in Flüssigkeitsbehältern enthaltene Flüssigkeiten zu durchmischen. Um präzise Messergebnisse zu erzielen, ist es beispielsweise notwendig, Reaktionsansätze, also Mischungen aus einer zu analysierenden Probenflüssigkeit, wie beispielsweise Blut, Plasma, Serum Urin etc., und einer oder mehreren Reagenzflüssigkeiten, wie beispielsweise Antikörperlösungen oder ähnliches, gleichmäßig zu durchmischen. Ebenso kann es notwendig sein, Reagenzflüssigkeiten, die sedimentierbare Inhaltsstoffe enthalten, wie beispielsweise partikuläre Festphasen, wie z.B. Antikörperbeschichtete Latexpartikel vor Gebrauch zu durchmischen, damit eine homogene Lösung entsteht.

Zu diesem Zweck ist in der Figur 1 der EP-A2-2308588 eine Schütteleinrichtung mit einem um eine senkrechte Drehachse beweglichen Koppelstift beschrieben. Zum Durchmischen einer Flüssigkeitsprobe in einem Flüssigkeitsbehälter wird ein Verfahren umfassend die folgenden Schritte beschrieben:
a. Aufnahme des Flüssigkeitsbehälters mit einem an einem automatisch verfahrbaren Transferarm über ein flexibles Verbindungselement befestigten Greifer, wobei der Greifer ein Koppelloch aufweist; dann
b. Verfahren des Greifers mit dem Flüssigkeitsbehälter zu der Schütteleinrichtung; dann
c. Herstellen einer Verbindung zwischen dem Greifer und der Schütteleinrichtung, wobei die Verbindung durch Einführen des Koppelstiftes der Schütteleinrichtung in das an dem Greifer vorgesehene Koppelloch in zur Drehachse des Koppelstiftes koaxialer Richtung erfolgt; und dann
d. Bewegen des Koppelstiftes.

Der Koppelstift bewegt sich exzentrisch auf einer Kreisbahn und zwingt dem gekoppelten Greifer und damit dem Flüssigkeitsbehälter und der darin enthaltene Flüssigkeit diese kreisförmige Bewegung auf, wodurch eine Durchmischung der enthaltenen Flüssigkeit bewirkt wird.

Theoretisch bewegt sich der Greifer synchron mit dem sich drehenden Koppelstift. In der Praxis wurde jedoch beobachtet, dass der Kontakt bzw. die Kopplung zwischen Koppelstift der Schütteleinrichtung und Koppelloch des Greifers gelegentlich zumindest kurzzeitig abreißt, weil der Koppelstift den Kontakt mit der Innenwand des Koppellochs verliert. Bei der darauffolgenden Wiederherstellung des Kontakts kann es zu kurzen Stößen kommen, die sich ebenfalls nachteilig auf den Mischvorgang auswirken können.

Die Öffnung des Koppellochs ist nämlich üblicherweise etwas größer als das eingreifende Kopfende des Koppelstiftes, um beim Einkoppeln auf eine hochpräzise Platzierung des Koppellochs über dem Koppelstift verzichten zu können, die den gesamten Mischvorgang wesentlich verlangsamen würde. Engere Fertigungstoleranzen hinsichtlich des Kopplungsmechanismus bestehend aus Koppelstift und Koppelloch würden einen erhöhten Abrieb und Verschleiß verursachen, wodurch ein häufigerer Austausch der betreffenden Teile notwendig wäre, wodurch wiederum ein erhöhter Wartungsaufwand für das automatische Analysegerät entstehen würde.

Weiter kann auch ein Spiel zwischen Greifer und Flüssigkeitsbehälter, welches z.B. auf Fertigungstoleranzen oder Verschleiß einer elastischen Klemmvorrichtung des Greifers basieren kann, zu einem Abriss der Schüttelbewegung führen.

Durch den kurzzeitigen Abriss des Kontakts zwischen Koppelstift und Koppelloch oder das Spiel zwischen Greifer und Flüssigkeitsbehälter kann es passieren, dass eine Flüssigkeitsprobe nicht wie gewünscht durchmischt wird und dass in der Folge ein fehlerhaftes Messergebnis generiert wird.

Die Vorrichtung weist einen Sensor auf, mit dessen Hilfe die Dauer, die Frequenz, und qualitativ die Amplitude der Greiferbewegung und damit der Mischvorgang im Flüssigkeitsbehälter überwacht werden kann. Dadurch kann eine mangelhafte Kopplung zwischen Koppelstift und Koppelloch erkannt werden. Allerdings erfolgt die Überwachung des Mischvorgangs dabei nur sehr indirekt und es kann daher zu fehlerhaften Überwachungsergebnissen kommen, da die Bewegung des Flüssigkeitsbehälters bzw. der Flüssigkeit selbst nicht erfasst wird, sondern lediglich die Bewegung des Greifers.

Auch bei anderen Ausführungen von Vorrichtungen zum Durchmischen einer Flüssigkeitsprobe in einem Flüssigkeitsbehälter können ähnliche Probleme bei der indirekten Überwachung von Mischvorgängen auftreten, was häufig dazu führt, dass nicht wie gewünscht durchmischte Flüssigkeitsproben nicht erkannt werden und in der Folge ein fehlerhaftes Messergebnis generiert wird.

Die der vorliegenden Erfindung zugrunde liegende Aufgabe besteht also darin, eine Vorrichtung zur Überwachung eines Mischvorgangs einer Flüssigkeitsprobe zur Verfügung zu stellen die so verbessert ist, dass sie eine zuverlässigere und weniger fehleranfällige Überwachung von Mischvorgängen ermöglicht, und dadurch die Häufigkeit von fehlerhaften Messergebnissen reduziert wird.

### Diese Aufgabe wird erfindungsgemäß durch die im Folgenden beschriebenen Gegenstände und Verfahren gelöst.

Die vorliegende Erfindung geht von der Überlegung aus, dass die Flüssigkeit in dem Flüssigkeitsbehälter maßgeblich dadurch durchmischt wird, dass sie aufgrund der Schüttelbewegung an der Innenwand des Flüssigkeitsbehälters aufsteigt und anschließend wieder zusammenfließt. Entscheidend für den Erfolg der Vermischung ist daher nicht die Bewegung des mit dem Greifer verbundenen Flüssigkeitsbehälters, sondern, ob die Flüssigkeit ausreichend durch die Schüttelbewegung an der Innenwand des Flüssigkeitsbehälters aufsteigt.

Gegenstand der vorliegenden Erfindung ist eine Vorrichtung zur Überwachung eines Mischvorgangs einer Flüssigkeitsprobe, die Vorrichtung aufweisend
a) einen Greifer für einen Flüssigkeitsbehälter,
b) eine Schütteleinrichtung,
   wobei die Schütteleinrichtung einen mit Flüssigkeit gefüllten, in den Greifer eingesetzten Flüssigkeitsbehälter zum Mischen der Flüssigkeit in Bewegung versetzen kann, und
c) einen optischen Sensor zur Ermittlung von Füllständen der Flüssigkeit an einer inneren Wandung des in dem durch die Schütteleinrichtung bewegten Flüssigkeitsbehälters, wobei der Füllstand in Abhängigkeit der Bewegung des Flüssigkeitsbehälters über die Zeit veränderlich ist, und
d) einen Speicher zum Speichern der durch den optischen Sensor ermittelten Füllstände,
e) eine Auswerteeinrichtung zum Auswerten der im Speicher gespeicherten Füllstände,
wobei die Auswerteeinrichtung anhand der gespeicherten Füllstände bestimmt, ob die Flüssigkeit ausreichend durchmischt wurde, wobei der optische Sensor einen Zeilensensor und/oder Flächensensor zur Erfassung von Helligkeitswerten umfasst.

Dies bewirkt, dass die Bewegung der Flüssigkeit direkt erfasst werden kann und z.B. eine mangelhafte Kopplung der Bewegung des Greifers mit dem Flüssigkeitsbehälter bzw. zwischen dem Flüssigkeitsbehälter und der Flüssigkeit ausgeschlossen werden kann. Weiter kann durch die unmittelbare optische Erfassung, wie hoch die Flüssigkeit durch die Bewegung an der Innenwand des Flüssigkeitsbehälters aufsteigt, eine sehr zuverlässige und wenig fehleranfällige Überwachung des Mischvorgangs erfolgen. Dies hat den Effekt, dass die Häufigkeit, mit der fehlerhafte Messergebnisse generiert werden, erheblich reduziert wird.

Bei Bewegung des Flüssigkeitsbehälters steigt im Allgemeinen der mittels des Sensors gemessene Füllstand der Flüssigkeit an der inneren Wandung des in dem durch die

Schütteleinrichtung bewegten Flüssigkeitsbehälters. Die Flüssigkeit ist ausreichend durchmischt, wenn der Füllstand in Folge der Bewegung durch die Schütteleinrichtung ausreichend gestiegen war und dies in den gespeicherten Füllständen entsprechend abgebildet ist. Andernfalls wurde die Flüssigkeit nicht ausreichend durchmischt.

Die Durchmischung der Flüssigkeit ist im Allgemeinen umso besser, je höher der Füllstand in Folge der Bewegung durch die Schütteleinrichtung gestiegen ist. Ab wann eine ausreichende Durchmischung vorliegt, kann dabei z.B. auch von Eigenschaften der Flüssigkeit selbst abhängen, wie z.B. dem Volumen der Flüssigkeit und/oder deren Viskosität.

Bevorzugt liegt eine ausreichende Durchmischung vor, wenn der Füllstand in Folge der Bewegung durch die Schütteleinrichtung bis oberhalb eines vorbestimmten Grenzwertes gestiegen war. Andernfalls liegt keine ausreichende Durchmischung vor.

Der optische Sensor der erfindungsgemäßen Vorrichtung umfasst einen Zeilensensor und/oder einen Flächensensor zur Erfassung von Helligkeitswerten. Dies hat den Vorteil, dass die gesamte Überwachungseinheit kompakter und kostengünstiger herstellbar ist. Weiter hat dies den Vorteil, dass dadurch die für die Auswertung benötigte Zeit aufgrund der vergleichsweise weniger umfangreichen Datenmenge stark reduziert werden kann. Dies ist sehr wichtig, da die Auswertung Zeitlich möglichst rasch erfolgen sollte, um z.B. ggf. bei unzureichender Durchmischung der Flüssigkeit nach einem Mischvorgang einen weiteren Mischvorgang ohne weiteren Zeitverlust unmittelbar anschließend vornehmen zu können. Daher ist die erfindungsgemäße Vorrichtung auch gegenüber z.B. klassischen Bildverarbeitungssystemen vorteilhaft. Daneben kann die Verwendung von einem simplen Zeilensensor und/oder Flächensensor auch kostenseitig vorteilhaft sein.

In einer weiteren vorteilhaften Ausgestaltung der erfindungsgemäßen Vorrichtung umfasst die Vorrichtung eine Beleuchtungsvorrichtung zur Beleuchtung der Flüssigkeit in dem Flüssigkeitsbehälter. Dies hat den Vorteil, dass die Beleuchtung auf die Erfordernisse des optischen Sensors eingestellt werden kann. So ist eine zuverlässigere optische Detektion der Füllstände möglich.

In einer weiteren vorteilhaften Ausgestaltung der erfindungsgemäßen Vorrichtung erfolgt die Beleuchtung in einer Auflichtgeometrie und/oder in einer Durchlichtgeometrie. Vorteilhafterweise ist die Beleuchtungsvorrichtung hierzu entsprechend ausgestaltet. Dies hat den Vorteil, dass die Vorrichtung für verschiedene Geometrien und Eigenschaften der Flüssigkeitsgefäße und der zu mischenden Flüssigkeiten optimiert ausgelegt werden kann.

In einer weiteren vorteilhaften Ausgestaltung der erfindungsgemäßen Vorrichtung umfasst die Vorrichtung weiter
f) mindestens ein flexibles Verbindungselement, das zwischen dem Transferarm und dem Greifer für den Flüssigkeitsbehälter angeordnet ist,
g) eine an dem Greifer für den Flüssigkeitsbehälter angeordnete Koppeleinrichtung,
   wobei mithilfe der Koppeleinrichtung eine lösbare Verbindung zwischen dem Motor der Schütteleinrichtung und dem Greifer für den Flüssigkeitsbehälter herstellbar ist.

Dies hat den Vorteil, dass sichergestellt werden kann, dass etwaige Bewegungen der Schütteleinrichtung ganz überwiegend auf den Flüssigkeitsbehälter übertragen werden, ohne die Bewegbarkeit des Greifers für den Flüssigkeitsbehälter auf eine Auf- und Abwärtsbewegung zu reduzieren. Durch das flexible Verbindungselement wird sichergestellt, dass z.B. eine ebene Kreisbewegung, die von einer Schütteleinrichtung erzeugt und über eine Koppeleinrichtung auf den Greifer für den Flüssigkeitsbehälter übertragen wird, nicht auch auf den Transferarm übertragen wird. Würde die ebene Kreisbewegung, in die der Greifer für den Flüssigkeitsbehälter mittels der Schütteleinrichtung versetzt wird, auch auf den Transferarm übertragen, käme es z.B. zu Schrittfehlern der Ansteuerung des Transferarms.

Der Begriff "flexibles Verbindungselement" soll im Folgenden eine Einrichtung bezeichnen, die zwischen dem Greifer und dem Transferarm angebracht ist, die die Bewegung der Schütteleinrichtung abfedert, die eine Bewegungsübertragung auf den Transferarm verhindert und die dem Greifer genügend Bewegbarkeit während des Schüttelvorgangs erlaubt, um eine optimale und effiziente Durchmischung der Flüssigkeit im Flüssigkeitsbehälter zu gewährleisten, gleichzeitig aber starr genug ist, so dass der Transferarm und der Greifer Küvetten aufnehmen, transportieren und abgeben können.

Bevorzugt ist bei der erfindungsgemäßen Vorrichtung vorgesehen, dass das flexible Verbindungselement aus einem elastischen und/oder dämpfenden Werkstoff wie zum Beispiel - aber nicht beschränkt auf - Elastomere, Urethangummi, Kautschuk, Gummi, Schaumstoff oder Federstahl besteht. Außerdem können auch mehrere separate Zwischenelemente neben- oder übereinander eingesetzt werden, um eine Verdrehsicherheit zu gewährleisten.

Das flexible Verbindungselement gewährleistet, dass der Flüssigkeitsbehälter und nicht der Transferarm mit ggf. daran angeordneten weiteren Systembestandteilen geschüttelt wird, und dass der Greifer für den Flüssigkeitsbehälter ausreichend bewegbar (also schüttelbar) ist, um eine optimale Durchmischung der Flüssigkeitsprobe im Flüssigkeitsbehälter zu erzielen. Gleichzeitig begrenzt sie durch ihre Dicke aber auch die Auslenkung des Greifers beim Transport des Gefäßes.

Der Begriff "Flüssigkeitsbehälter" bezeichnet eine Einrichtung, die die zu durchmischende und zu transportierende Flüssigkeit enthält.

Weiterhin handelt es sich bei dem Flüssigkeitsbehälter vorzugsweise um mindestens einen Behälter ausgewählt aus der Gruppe enthaltend
- Mikroreaktionsgefäße (beispielsweise ein sogenanntes "Eppendorf-Tube"),
- (Photometer-) Küvetten und/oder
- Zentrifugengefäße.

Der Begriff "Transferarm" soll im Folgenden eine Einrichtung bezeichnen, an welcher der Greifer für den Flüssigkeitsbehälter über das flexible Zwischenstück angeordnet ist.

Vorzugsweise kann mittels des Transferarms die Halterung für den Flüssigkeitsbehälter bewegt werden.

Letzteres ergibt insbesondere dann Sinn, wenn der Transferarm Teil einer Roboterstation zur Behandlung, Manipulation und Analyse von chemischen, klinischen und/oder biologischen Proben ist. Dabei dient der Transferarm beispielsweise zum Transport von Flüssigkeitsbehältern, wie z.B. Küvetten, von einer Pipettierstation zu einem Photometer oder einem PCR-Cycler.

Bevorzugt wird der Transferarm dabei robotisch verfahren. Er ist ferner bevorzugt Teil eines Laborautomaten oder Laborsystems, beispielsweise für die Mikrobiologie, die Analytik, die Forensik oder die klinische Diagnostik.

Der Begriff "Schütteleinrichtung" soll generell eine Einrichtung bezeichnen, die Flüssigkeit im Flüssigkeitsbehälter in Bewegung versetzt, um eine Durchmischung zu erreichen.

In einer bevorzugten Ausführungsform weist die Schütteleinrichtung einen motorisch angetriebenen Exzenter auf.

Unter einem Exzenter versteht man in der Mechanik und im Maschinenbau eine auf einer Welle angebrachte Steuerungsscheibe, deren Mittelpunkt außerhalb der Wellenachse liegt. Mit einem Exzenter können z.B. rotatorische in translatorische Bewegungen umgewandelt werden und umgekehrt. Bei dem Motor kann es sich beispielsweise um einen Elektromotor, einen Servomotor, oder einen Schrittmotor handeln. Der Exzenter kann dabei koaxial, ebenso aber auch über einen Riemenantrieb oder einen Ritzelantrieb angetrieben werden.

Bei der Schütteleinrichtung kann es sich jedoch ebenso um eine Ultraschall-Schütteleinrichtung oder einen Lautsprecher handeln, mit deren Hilfe Schwingungen auf den Flüssigkeitsbehälter übertragen werden können.

In einer besonders bevorzugten Ausführungsform der Erfindung sind der Motor und der Greifer für den Flüssigkeitsbehälter nur während des Mischvorgangs miteinander verbunden.

Der Begriff "Greifer" soll eine Einrichtung bezeichnen, die den Flüssigkeitsbehälter halten kann. Vorzugsweise kann der Greifer den Flüssigkeitsbehälter auch greifen, halten und wieder freigeben. Vorteilhaft ist dabei, wenn der Greifer einstückig gefertigt ist. Dies ermöglicht eine reproduzierbare Fertigung von höheren Stückzahlen, da keine Einzelteile zusammengesetzt und der einwandfreie Betrieb des zusammengesetzten Greifers nur stichprobenartig - aber nicht bei jedem einzelnen Stück - überprüft werden muss.

Der einteilige Greifer ist elastisch verformbar ausgestaltet und ist in einem Spannzustand. Wird er mit ausreichender Kraft gegen ein Hindernis bewegt, kommt es zu einem Schnappeffekt und der Greifer geht auf. Durch weiteres Bewegen in Richtung des Hindernisses umschließt der Greifer das Hindernis und durch den Spannzustand schnappt er wieder zu, sobald das Hindernis komplett umschlossen ist. Zudem gibt der Greifer erst bei Überwindung einer Lösekraft, die notwendig ist, um den Greifer wieder zu öffnen, das umschlossene Hindernis wieder frei.

Grundsätzlich ist das Greifen eine Grundbewegung zum Erfassen und Halten und stellt die Verbindung zwischen Roboter bzw. Analysegerät und Werkstück, hier Flüssigkeitsbehälter, her. Ausschlaggebend für eine sichere Verbindung sind dabei die Art der Wirkpaarung und die Anzahl der Kontaktebenen. Die Wirkpaarung kann über Kraft-, Form- oder Stoffpaarung erzielt werden. Beim Einsatz einer Kraftpaarung wird der Halt durch das Ausüben eines Druckes auf die Werkstückoberfläche erzeugt. Im Gegensatz dazu erfolgt bei der Formpaarung das Halten über eine formgleiche Umschließung des Werkstücks. Dabei sind bei sicherer Führung die übertragenen Klemmkräfte sehr klein. Bei einer Stoffpaarung erfolgt der Kontakt mit dem Werkstück über die Ausnutzung der Adhäsion.

Des Weiteren lassen sich die Greifsysteme nach ihrer Wirkung in mechanische, pneumatische, magnetische und adhäsive Systeme unterteilen. Diese Wirkungen können zur größeren Flexibilität des Greifsystems auch kombiniert eingesetzt werden.

Bevorzugt werden im Rahmen dieser Erfindung mechanische Greifer, aber insbesondere auch magnetische Greifer sind verwendbar. Mechanische Greifer gibt es als Einfinger-, Zweifinger- oder Mehrfingergreifer in starrer, starrgelenkiger oder elastischer Ausführung.

Der Begriff "Koppeleinrichtung" eine Einrichtung bezeichnen, über die die Schütteleinrichtung mit dem Greifer für den Flüssigkeitsbehälter lösbar verbunden werden kann, z.B. über einen Exzenterpin und ein Koppelloch.

Darüber hinaus wird eine Koppeleinrichtung bevorzugt, die ein Koppelloch oder einen Koppelstift aufweist, das bzw. der so ausgestaltet ist, dass es bzw. er in eine komplementäre Einrichtung an der Schütteleinrichtung eingreifen kann. Durch eine an der Öffnung des Koppellochs angeordnete Fase kann das Koppelloch immer direkt auf den Koppelstift gefahren werden, ohne dass dieser vorher in eine bestimmte Stellung gefahren werden muss.

Bevorzugt kann dabei vorgesehen sein, dass die Schütteleinrichtung einen Koppelstift, bevorzugterweise in Form eines Exzenterpins, aufweist, der in ein komplementäres Koppelloch in der Koppeleinrichtung eingreifen kann. Eine solche Ausgestaltung eignet sich besonders dann, wenn es sich bei der Schütteleinrichtung um einen Motor mit Exzenter handelt.

In alternativen Ausführungsformen der erfindungsgemäßen Vorrichtung liegt die Koppeleinrichtung z.B. als Reibkupplung, magnetische Kupplung, oder als Scheibenkupplung vor. Eine solche Ausgestaltung eignet sich besonders dann, wenn es sich bei der Schütteleinrichtung um eine Ultraschalleinrichtung oder einen Lautsprecher handelt.

Vorzugsweise ist die Schütteleinrichtung überdies bewegbar ausgestaltet.

Durch eine solche Anordnung ist es möglich, vor Beginn des Mischprozesses die Schütteleinrichtung in Kontakt mit dem Greifer für den Flüssigkeitsbehälter zu bringen. Dies kann insbesondere dann sinnvoll sein, wenn der Transferarm eine geringere Bewegbarkeit aufweist.

Ein weiterer Gegenstand der Erfindung ist ein automatisches Analysengerät zur Behandlung, Manipulation und Analyse von chemischen und/oder biologischen Proben, aufweisend eine erfindungsgemäße Vorrichtung zur Überwachung eines Mischvorgangs einer Flüssigkeitsprobe.

In einer bevorzugten Ausführungsform des automatischen Analysegeräts umfasst das automatische Analysegerät eine Vielzahl von Aufnahmepositionen für jeweils eine Küvette oder ein Reagenzgefäß und/oder mindestens eine automatisch verfahrbare Pipettiervorrichtung. Weiter umfasst das automatische Analysegerät bevorzugt einen oder mehrere robotisch verfahrbare und/oder robotisch schwenkbare Transferarme, die bevorzugt wenigstens teilweise mittels eines Riemenantriebs bewegt werden können.

In weiterer vorteilhafter Ausgestaltung umfasst das Analysegerät eine Messeinrichtung mit einem Photometer, die eine photometrische Untersuchung einer Probe ermöglicht.

Ein weiterer Gegenstand der Erfindung ist ein Verfahren zur Überwachung eines Mischvorgangs einer Flüssigkeitsprobe, das Verfahren aufweisend die Schritte:
a) Halten eines die Flüssigkeitsprobe enthaltenden Flüssigkeitsbehälters mit einem Greifer,
b) Mischen der Flüssigkeitsprobe,
c) Ermittlung von Füllständen der Flüssigkeit an einer inneren Wandung des in dem durch die Schütteleinrichtung bewegten Flüssigkeitsbehälters mittels eines optischen Sensors, bevorzugt während der gesamten Zeit der Bewegung, wobei der Füllstand in Abhängigkeit der Bewegung des Flüssigkeitsbehälters über die Zeit veränderlich ist,
d) Speichern der durch den optischen Sensor ermittelten einzelnen Füllständen in einem Speicher,
e) Auswertung der im Speicher gespeicherten Füllstände mittels einer Auswerteeinrichtung,
f) Bestimmung mittels der Auswerteeinrichtung anhand der gespeicherten Füllstände, ob die Flüssigkeit ausreichend durchmischt wurde.

In einer bevorzugten Ausführung weist das Verfahren weiter mindestens einen der folgenden Schritte auf:
g) Greifen des Flüssigkeitsbehälters vor Beginn des Durchmischens mittels des Greifers,
h) Weitertransport des Flüssigkeitsbehälters nach Entkopplung, und/oder
i) Loslassen des Flüssigkeitsbehälters.

In einer weiteren bevorzugten Ausführung wird das Verfahren mit einer erfindungsgemäßen Vorrichtung zur Überwachung eines Mischvorgangs einer Flüssigkeitsprobe durchgeführt.

Der Begriff "photometrische Untersuchung", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

Unter einer "Flüssigkeitsprobe" bzw. "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind. Normalerweise wird die Probe eine Teilmenge der zu analysierende Flüssigkeit darstellen, z.B. bei einer Blut-, Plasma- oder Serumprobe. In Ausnahmefällen kann die Probe jedoch auch die gesamte verfügbare Flüssigkeit darstellen.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

### Die Erfindung wird anhand von Zeichnungen exemplarisch näher erläutert. Darin zeigen:

FIG. 1 ein erfindungsgemäßes automatisches Analysegerät 1,
FIG. 2 und 3 eine schematische Darstellung einer erfindungsgemäßen Vorrichtung zur Überwachung eines Mischvorgangs einer Flüssigkeitsprobe mit einer Beleuchtung in einer Auflichtgeometrie bzw. in einer Durchlichtgeometrie,
FIG. 4 bis 8 schematische Darstellungen der mit einem optischen Zeilen-Sensor ermittelten Füllstände über die Zeit.

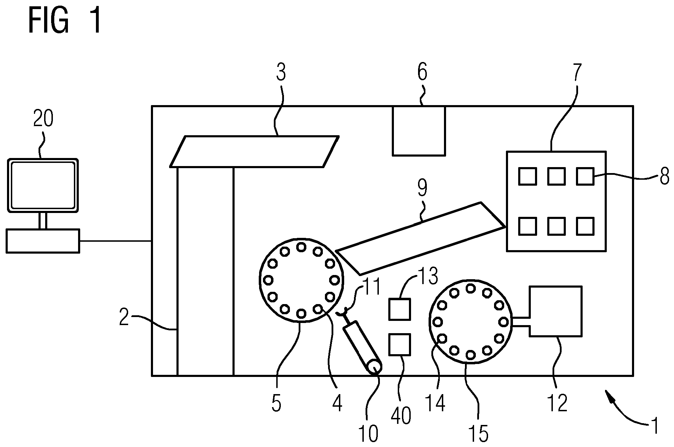

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

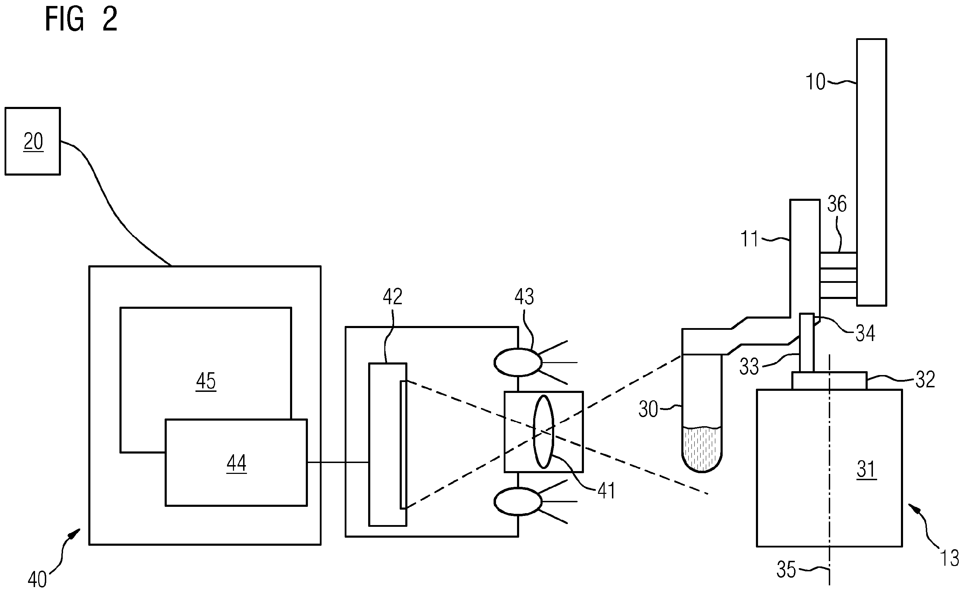

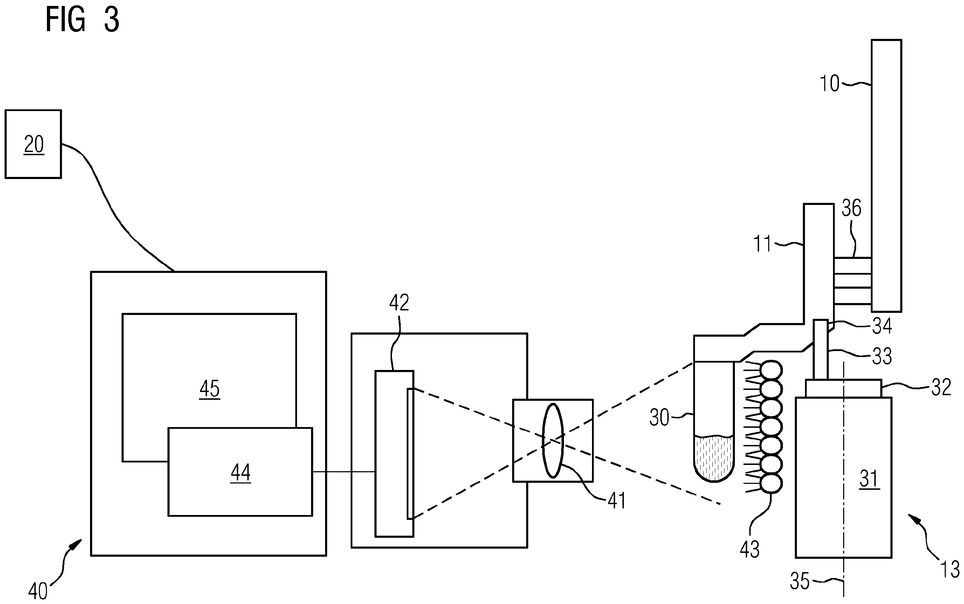

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von dem Transferarm 10 mit einem Greifer 11 aus einer Aufnahmeposition 4 der Inkubationseinrichtung 5 entnommen und zum Durchmischen des Reaktionsansatzes zu einer in FIG. 2 und FIG. 3 näher dargestellten Schütteleinrichtung 13 transferiert. Der Mischvorgang der Flüssigkeitsprobe wird dabei mit einer erfindungsgemäßen Vorrichtung 40 zur Überwachung eines Mischvorgangs überwacht. Nach Beendigung des Mischvorgangs wird die Küvette weiter in eine Aufnahmeposition 14 der drehbaren Aufnahmevorrichtung 15 für die photometrische Messstation 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 zeigt eine schematische Darstellung einer erfindungsgemäßen Vorrichtung 40 zur Überwachung eines Mischvorgangs einer Flüssigkeitsprobe mit einer Beleuchtung in einer Auflichtgeometrie. Dargestellt ist eine Schütteleinrichtung 13, die als System zum Schwenken von Flüssigkeitsbehältern 30, insbesondere Küvetten, ausgebildet ist. Die Schütteleinrichtung 13 umfasst einen Greifer 11 für die Küvette und einen Transferarm 10, mit dem die leere oder flüssigkeitsgefüllte Küvette in einem automatischem Analysegerät 1 verfahren werden kann. Der Transferarm 10 ist über ein flexibles Verbindungselement 36 mit dem Greifer 11 verbunden.

Um die sich in der Küvette befindende Flüssigkeit zu mischen, wird der Greifer 11 mit dem Koppelloch 34 auf den Teller 10 eines Exzenters absetzt, so dass der Koppelstift 33 in das Koppelloch 34 greift. Eine Bewegung des Motors 31 um die Drehachse 35 führt zusammen mit der flexiblen Lagerung des Greifers 11 zu einer Schwenkbewegung der Küvette. Diese Bewegung der Küvette bewirkt ein Aufsteigen der zu mischenden Flüssigkeit an der inneren Wandung der Küvette. Der Füllstand der Flüssigkeit an der inneren Wandung der durch die Schütteleinrichtung 13 bewegten Küvette wird mit Hilfe eines Objektives 41 auf einen Zeilensensor 42 abgebildet. Der Zeilensensor 42 erfasst den Füllstand 51 der Flüssigkeit an der inneren Wandung der Küvette als Helligkeitswert. Für eine ausreichende Beleuchtung ist eine Beleuchtungsvorrichtung 43 vorgesehen, die die Küvette in einer Auflichtgeometrie beleuchtet. Die Daten des Zeilensensors 42 werden in rascher Folge über die gesamte Dauer des Mischvorgangs in dem Speicher 44 abgespeichert. Nach Beendigung des Mischvorgangs werden die Daten, die den zeitlichen Verlauf des Füllstandes der Flüssigkeit an der inneren Wandung der Küvette repräsentieren von einer Auswerteeinrichtung 45 weiter verarbeitet. Anhand der gespeicherten Füllstände bestimmt die Auswerteeinrichtung 45, ob die Flüssigkeit ausreichend durchmischt wurde oder ob keine ausreichende Durchmischung erfolgte. Wenn der Füllstand 51 in Folge der Bewegung der Küvette während des Mischvorgangs sich ausreichend erhöht, liegt eine ausreichende Durchmischung vor. Andernfalls liegt keine ausreichende Durchmischung vor.

FIG. 3 zeigt eine schematische Darstellung einer erfindungsgemäßen Vorrichtung 40 zur Überwachung eines Mischvorgangs einer Flüssigkeitsprobe mit einer Beleuchtung in einer Durchlichtgeometrie. Die Vorrichtung ist ähnlich aufgebaut wie die in FIG. 2 beschriebene. Jedoch ist für eine ausreichende Beleuchtung eine Beleuchtungsvorrichtung 43 vorgesehen, die die Küvette in einer Durchlichtgeometrie beleuchtet.

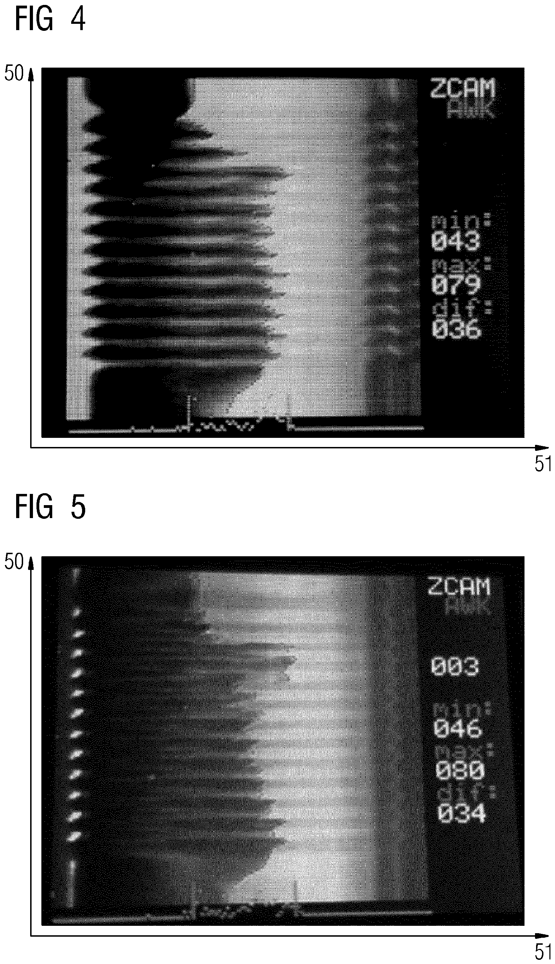

FIG. 4 bis 8 zeigen schematische Darstellungen der mit einem optischen Zeilen-Sensor ermittelten Füllstände der Flüssigkeit an einer inneren Wandung einer in der durch die Schütteleinrichtung 13 bewegten Küvette. Der Füllstand 51 ist über die Zeit 50 in Abhängigkeit der Bewegung der Küvette veränderlich. Bei Bewegung der Küvette steigt im Allgemeinen der Füllstand 51. Der Füllstand 51 steigt dabei in Richtung des entsprechenden Pfeils an. Die Zeit 50 verläuft entgegen der Richtung des entsprechenden Pfeils, der in die Vergangenheit zeigt.

FIG. 4 bzw. FIG. 5 zeigen die Daten jeweils eines Mischvorgangs, bei dem eine ausreichende Durchmischung der Flüssigkeit stattgefunden hat. Der gemessene Füllstand 51 hat sich von einem minimalen Füllstand 51 von 43 (bzw. 46) Füllstands-Einheiten auf einen maximalen Füllstand 51 von 79 (bzw. 80) Füllstands-Einheiten in Folge der Bewegung der Küvette erhöht. Die maximale Differenz zwischen den Füllständen beträgt 36 (bzw. 34) Füllstands-Einheiten.

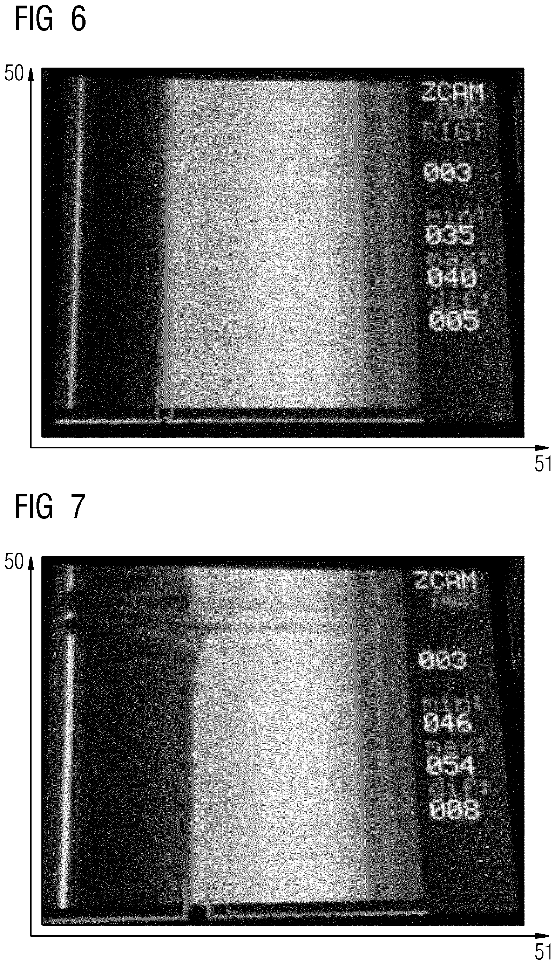

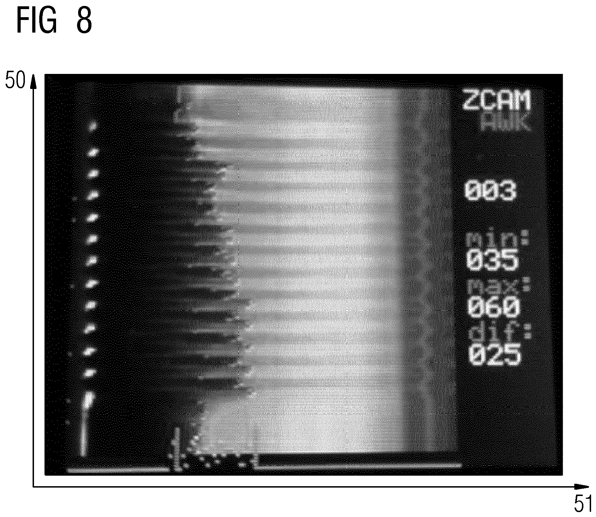

FIG. 6, 7 und 8 zeigen die Daten jeweils eines Mischvorgangs, bei dem keine ausreichende Durchmischung der Flüssigkeit stattgefunden hat. In FIG 6 hat sich der gemessene Füllstand 51 von einem minimalen Füllstand 51 von 35 Füllstands-Einheiten auf einen maximalen Füllstand 51 von 40 Füllstands-Einheiten nur geringfügig erhöht. Die maximale Differenz zwischen den Füllständen beträgt 5 Füllstands-Einheiten. Aufgrund eines Defektes erfolgte keine oder keine signifikante Bewegung der Küvette. Die Flüssigkeit wurde nicht ausreichend durchmischt. In FIG 7 hat sich der gemessene Füllstand 51 von einem minimalen Füllstand 51 von 46 Füllstands-Einheiten auf einen maximalen Füllstand 51 von 54 Füllstands-Einheiten ebenfalls nur geringfügig erhöht. Die maximale Differenz zwischen den Füllständen beträgt 8 Füllstands-Einheiten. Aufgrund einer Verklemmung am Motor 31 erfolgte keine ausreichende Bewegung der Küvette. Die Flüssigkeit wurde nicht ausreichend durchmischt. In FIG 8 hat sich der gemessene Füllstand 51 von einem minimalen Füllstand 51 von 35 Füllstands-Einheiten auf einen maximalen Füllstand 51 von 60 Füllstands-Einheiten erhöht. Die maximale Differenz zwischen den Füllständen beträgt 25 Füllstands-Einheiten. Die Küvette wurde zwar über den gesamten Verlauf des Mischvorgangs bewegt. Jedoch hat sich der Füllstand 51 der Flüssigkeit nicht ausreichend erhöht. Die Flüssigkeit wurde nicht ausreichend durchmischt.

### Bezugszeichenliste

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Greifer
- 12: Messstation
- 13: Schütteleinrichtung
- 14: Aufnahmeposition
- 15: Aufnahmevorrichtung
- 20: Steuereinheit
- 30: Flüssigkeitsbehälter
- 31: Motor
- 32: Teller
- 33: Koppelstift
- 34: Koppelloch
- 35: Drehachse
- 36: flexibles Verbindungselement
- 40: Vorrichtung
- 41: Objektiv
- 42: Sensor
- 43: Beleuchtungsvorrichtung
- 44: Speicher
- 45: Auswerteeinrichtung
- 50: Zeit
- 51: Füllstand

## Patentansprüche

1. Vorrichtung (40) zur Überwachung eines Mischvorgangs einer Flüssigkeitsprobe, die Vorrichtung (40) aufweisend
a) einen Greifer (11) für einen Flüssigkeitsbehälter (30),
b) eine Schütteleinrichtung (13),
wobei die Schütteleinrichtung (13) einen mit Flüssigkeit gefüllten, in den Greifer (11) eingesetzten Flüssigkeitsbehälter (30) zum Mischen der Flüssigkeit in Bewegung versetzen kann,
**dadurch gekennzeichnet, dass** die Vorrichtung aufweist
c) einen optischen Sensor (42) zur Ermittlung von Füllständen der Flüssigkeit an einer inneren Wandung des in dem durch die Schütteleinrichtung (13) bewegten Flüssigkeitsbehälters (30), wobei der Füllstand (51) in Abhängigkeit der Bewegung des Flüssigkeitsbehälters (30) über die Zeit (50) veränderlich ist,
d) einen Speicher (44) zum Speichern der durch den optischen Sensor (42) ermittelten Füllstände, und
e) eine Auswerteeinrichtung (45) zum Auswerten der im Speicher (44) gespeicherten Füllstände,
wobei die Auswerteeinrichtung (45) anhand der gespeicherten Füllstände bestimmt, ob die Flüssigkeit ausreichend durchmischt wurde, wobei der optische Sensor (42) einen Zeilensensor und/oder Flächensensor zur Erfassung von Helligkeitswerten umfasst.

2. Vorrichtung (40) nach Anspruch 1, wobei die Vorrichtung (40) weiter eine Beleuchtungsvorrichtung (43) zur Beleuchtung der Flüssigkeit in dem Flüssigkeitsbehälter (30) umfasst. Vertraulich

3. Vorrichtung (40) nach Anspruch 2, wobei die Beleuchtung der Flüssigkeit in einer Auflichtgeometrie erfolgt.

4. Vorrichtung (40) nach Anspruch 2, wobei die Beleuchtung der Flüssigkeit in einer Durchlichtgeometrie erfolgt.

5. Vorrichtung (40) nach einem der vorhergehenden Ansprüche, wobei die Vorrichtung (40) weiter aufweist
f) mindestens ein flexibles Verbindungselement (36), das zwischen einem Transferarm (10) und dem Greifer (11) für den Flüssigkeitsbehälter (30) angeordnet ist,
g) eine an dem Greifer (11) für den Flüssigkeitsbehälter (30) angeordnete Koppeleinrichtung,
wobei mithilfe der Koppeleinrichtung eine lösbare Verbindung zwischen einem Motor (31) der Schütteleinrichtung (13) und dem Greifer (11) für den Flüssigkeitsbehälter (30) herstellbar ist.

6. Vorrichtung (40) nach Anspruch 5, wobei das flexible Verbindungselement (36) aus einem elastischen und/oder dämpfenden Werkstoff, bevorzugt aus einer Scheibe aus Gummi besteht.

7. Vorrichtung (40) gemäß einem der vorhergehenden Ansprüche, **dadurch gekennzeichnet, dass** es sich bei dem Flüssigkeitsbehälter (30) um mindestens einen Behälter ausgewählt aus der Gruppe enthaltend
• Mikroreaktionsgefäß,
• Photometerküvette, und/oder
• Zentrifugengefäß
handelt.

8. Vorrichtung (40) gemäß einem der vorhergehenden Ansprüche, **dadurch gekennzeichnet, dass** der Greifer (11) für den Flüssigkeitsbehälter (30) einstückig gefertigt ist.

9. Vorrichtung (40) gemäß einem der vorhergehenden Ansprüche, **dadurch gekennzeichnet, dass** die Schütteleinrichtung (13) bewegbar ausgestaltet ist.

10. Vorrichtung (40) gemäß einem der Ansprüche 5 bis 9, wobei die Vorrichtung (40) eine Koppeleinrichtung umfassend ein Koppelloch (34) oder einen Koppelstift (33) aufweist, das bzw. der so ausgestaltet ist, dass es bzw. er in eine komplementäre Einrichtung an der Schütteleinrichtung (13) eingreifen kann.

11. Automatisches Analysengerät (1) zur Behandlung, Manipulation und Analyse von chemischen und/oder biologischen Proben, aufweisend eine Vorrichtung (40) gemäß einem der vorhergehenden Ansprüche.

12. Verfahren zur Überwachung eines Mischvorgangs einer Flüssigkeitsprobe,
aufweisend die Schritte:
a) Halten eines die Flüssigkeitsprobe enthaltenden Flüssigkeitsbehälters (30) mit einem Greifer (11)
b) Mischen der Flüssigkeitsprobe,
c) Ermittlung von Füllständen der Flüssigkeit an einer inneren Wandung des in dem durch die Schütteleinrichtung (13) bewegten Flüssigkeitsbehälters (30) mittels eines optischen Sensors (42), wobei der optische Sensor (42) einen Zeilensensor und/oder Flächensensor zur Erfassung von Helligkeitswerten umfasst, bevorzugt während der gesamten Zeit (50) der Bewegung, wobei der Füllstand (51) in Abhängigkeit der Bewegung des Flüssigkeitsbehälters (30) über die Zeit (50) veränderlich ist,
d) Speichern der durch den optischen Sensor (42) ermittelten einzelnen Füllständen in einem Speicher (44),
e) Auswertung der im Speicher (44) gespeicherten Füllstände mittels einer Auswerteeinrichtung (45),
f) Bestimmung mittels der Auswerteeinrichtung (45) anhand der gespeicherten Füllstände, ob die Flüssigkeit ausreichend durchmischt wurde.

13. Verfahren gemäß Anspruch 12, ferner umfassend mindestens einen der Schritte:
g) Greifen des Flüssigkeitsbehälters (30) vor Beginn des Durchmischens mittels des Greifers (11),
h) Weitertransport des Flüssigkeitsbehälters (30) nach Entkopplung, und/oder
i) Loslassen des Flüssigkeitsbehälters (30).

14. Verfahren gemäß einem der Ansprüche 12 oder 13, **dadurch gekennzeichnet, dass** es mit einer Vorrichtung (40) gemäß einem der Ansprüche 1 - 11 durchgeführt wird.

## Claims

1. Apparatus (40) for monitoring an operation of mixing a liquid sample, the device (40) comprising
a) a gripper (11) for a liquid container (30),
b) a shaking device (13),
wherein the shaking device (13) can set in motion a liquid container (30) filled with liquid and inserted into the gripper (11) for mixing the liquid,
**characterized in that** the apparatus comprises
c) an optical sensor (42) for ascertaining filling levels of the liquid on an inner wall of the liquid container (30) moved by the shaking device (13), wherein the filling level (51) is variable over time (50) in dependence on the motion of the liquid container (30),
d) a memory (44) for storing the filling levels ascertained by the optical sensor (42), and
e) an evaluation device (45) for evaluating the filling levels stored in the memory (44),
wherein the evaluation device (45) determines on the basis of the stored filling levels whether the liquid has been sufficiently mixed through, wherein the optical sensor (42) comprises a line sensor and/or area sensor for detecting brightness values.

2. Apparatus (40) according to Claim 1, wherein the apparatus (40) also comprises an illuminating apparatus (43) for illuminating the liquid in the liquid container (30).

3. Apparatus (40) according to Claim 2, wherein the illumination of the liquid takes place in a reflected-light geometry.

4. Apparatus (40) according to Claim 2, wherein the illumination of the liquid takes place in a transmitted-light geometry.

5. Apparatus (40) according to one of the preceding claims, wherein the apparatus (40) also comprises
f) at least one flexible connecting element (36), which is arranged between a transfer arm (10) and the gripper (11) for the liquid container (30),
g) a coupling device arranged on the gripper (11) for the liquid container (30),
wherein a releasable connection between a motor (31) of the shaking device (13) and the gripper (11) for the liquid container (30) can be established with the aid of the coupling device.

6. Apparatus (40) according to Claim 5, wherein the flexible connecting element (36) consists of an elastic and/or damping material, preferably a sheet of rubber.

7. Apparatus (40) according to one of the preceding claims, **characterized in that** the liquid container (30) is at least one container selected from the group comprising
• a microreaction vessel,
• a photometer cuvette, and/or
• a centrifuge vessel.

8. Apparatus (40) according to one of the preceding claims, **characterized in that** the gripper (11) for the liquid container (30) is produced in one piece.

9. Apparatus (40) according to one of the preceding claims, **characterized in that** the shaking device (13) is movably designed.

10. Apparatus (40) according to one of Claims 5 to 9, wherein the apparatus (40) has a coupling device comprising a coupling hole (34) or a coupling pin (33), which is designed in such a way that it can engage in a complementary device on the shaking device (13).

11. Automatic analyser (1) for the treatment, manipulation and analysis of chemical and/or biological samples, comprising an apparatus (40) according to one of the preceding claims.

12. Method for monitoring an operation of mixing a liquid sample,
comprising the steps of:
a) holding a liquid container (30) containing the liquid sample by a gripper (11)
b) mixing the liquid sample,
c) ascertaining filling levels of the liquid on an inner wall of the liquid container (30) moved by the shaking device (13) by means of an optical sensor (42), wherein the optical sensor (42) comprises a line sensor and/or area sensor for detecting brightness values, preferably during the entire time (50) of the movement, wherein the filling level (51) is variable over time (50) in dependence on the movement of the liquid container (30),
d) storing the individual filling levels ascertained by the optical sensor (42) in a memory (44),
e) evaluating the filling levels stored in the memory (44) by means of an evaluation device (45),
f) determining by means of the evaluation device (45) on the basis of the stored filling levels whether the liquid has been sufficiently mixed through.

13. Method according to Claim 12, also comprising at least one of the steps:
g) gripping the liquid container (30) by means of the gripper (11) before the beginning of mixing through,
h) further transporting the liquid container (30) after decoupling, and/or
i) letting go the liquid container (30).

14. Method according to either of Claims 12 and 13, **characterized in that** it is carried out with an apparatus (40) according to one of Claims 1 - 11.

## Revendications

1. Installation (40) de contrôle d'une opération de mélange d'un échantillon de liquide, l'installation (40) comportant
a) un outil (11) de préhension d'un récipient (30) à liquide,
b) un dispositif (13) d'agitation,
dans lequel le dispositif (13) d'agitation peut, pour le mélange du liquide, mettre en mouvement un récipient (30) à liquide, rempli de liquide et inséré dans l'outil (11) de préhension,
**caractérisée en ce que** l'installation comporte
c) un capteur (42) optique de détermination de niveaux du liquide sur une paroi intérieure du récipient (30) à liquide mis en mouvement par le dispositif (13) d'agitation, dans lequel le niveau (51) se modifie avec le temps (50) en fonction du mouvement du récipient (30) à liquide,
d) une mémoire (44) pour mettre en mémoire les niveaux déterminés par le capteur (42) optique, et
e) un dispositif (45) d'analyse pour analyser les niveaux mis dans la mémoire (44),
dans laquelle
le dispositif (45) d'analyse détermine, à l'aide des niveaux mis en mémoire, si le liquide a été mélangé suffisamment, le capteur (42) optique comprenant un capteur de lignes et/ou un capteur de surfaces pour détecter des valeurs de luminosité.

2. Installation (40) suivant la revendication 1, dans laquelle l'installation (40) comprend en outre une installation (43) d'éclairage pour éclairer le liquide dans le récipient (30) à liquide.

3. Installation (40) suivant la revendication 2, dans laquelle l'éclairage des liquides s'effectue suivant une géométrie de lumière incidente.

4. Installation (40) suivant la revendication 2, dans laquelle l'éclairage du liquide s'effectue suivant une géométrie de lumière transmise.

5. Installation (40) suivant l'une des revendications précédentes, dans laquelle l'installation (40) comporte en outre
f) au moins un élément (36) souple de liaison, qui est disposé entre un bras (10) de transfert et l'outil (11) de préhension du récipient (30) à liquide,
g) au moins un dispositif d'accouplement monté sur l'outil (11) de préhension du récipient (30) à liquide,
dans laquelle, à l'aide du dispositif d'accouplement, peut être ménagée une liaison détachable entre un moteur (31) du dispositif (13) d'agitation et l'outil (11) de préhension du récipient (30) à liquide.

6. Installation (40) suivant la revendication 5, dans laquelle l'élément (36) souple de liaison est constitué d'un matériau élastique et/ou d'amortissement, de préférence d'un disque en caoutchouc.

7. Installation (40) suivant l'une des revendications précédentes, **caractérisée en ce que** le récipient (30) à liquide est au moins un récipient choisi dans le groupe consistant en
• un vase pour micro-réaction,
• une cuvette de photomètre, et/ou
• un vase de centrifugeuse.

8. Installation (40) suivant l'une des revendications précédentes, **caractérisée en ce que** l'outil (11) de préhension du récipient (30) à liquide est d'une seule pièce.

9. Installation (40) suivant l'une des revendications précédentes, **caractérisée en ce que** le dispositif (13) d'agitation est de conformation mobile.

10. Installation (40) suivant l'une des revendications 5 à 9, dans laquelle l'installation (40) a un dispositif d'accouplement comprenant un trou (34) d'accouplement ou une broche (33) d'accouplement, qui est conformé de manière à pouvoir pénétrer dans un dispositif complémentaire du dispositif (13) d'agitation.

11. Appareil (1) d'analyse automatique pour le traitement, la manipulation et l'analyse d'échantillons chimiques et/ou biologiques, comportant une installation (40) suivant l'une des revendications précédentes.

12. Procédé de contrôle d'une opération de mélange d'un échantillon de liquide,
comportant les stades
a) maintien d'un récipient (30) à liquide contenant l'échantillon de liquide par un outil (11) de préhension,
b) mélange de l'échantillon de liquide,
c) détermination, au moyen d'un capteur (42) optique, de niveaux de liquide sur une paroi intérieure du récipient (30) à liquide mis en mouvement par le dispositif (13) d'agitation, dans lequel le capteur (42) optique comprend un capteur de lignes et/ou un capteur de surfaces pour la détection de valeurs de luminosité, de préférence pendant tout le temps (50) de la mise en mouvement, dans lequel le niveau (51) est variable avec le temps (50) en fonction du mouvement du récipient (30) à liquide,
d) mise, dans une mémoire (44) des divers niveaux déterminés par le capteur (42) optique,
e) analyse, au moyen d'un dispositif (45) d'analyse des niveaux mis dans la mémoire (44),
f) détermination, au moyen du dispositif (45) d'analyse à l'aide des niveaux mis en mémoire, si le liquide a été mélangé suffisamment.

13. Procédé suivant la revendication 12, comprenant en outre au moins l'un des stades suivants :
g) prise par l'outil (11) de préhension du récipient (30) à liquide, avant le début du mélange,
h) acheminement du récipient (30), après désaccouplement et/ou
i) relâchement du récipient (30) à liquide.

14. Procédé suivant l'une des revendications 12 ou 13, **caractérisé en ce qu'**on l'effectue par une installation (40) suivant l'une des revendications 1 à 11.
